# EUROPÄISCHE PATENTSCHRIFT

(11) **EP 2 242 638 B1**
(45) Veröffentlichungstag und Bekanntmachung des Hinweises auf die Patenterteilung: **18.07.2012**
(21) Anmeldenummer: 09707698.8
(22) Anmeldetag: 31.01.2009
(51) Int. Cl.: B29C 70/46

(54) **Verfahren zur Herstellung eines Verbundteils**
Method for producing a composite part
Procédé de fabrication d une pièce composite

(30) Priorität: 09.02.2008 DE 102008008392
(43) Veröffentlichungstag der Anmeldung: 27.10.2010
(73) Patentinhaber: Bayer MaterialScience AG, 51368 Leverkusen (DE); Trocellen GmbH, 53840 Troisdorf (DE)
(72) Erfinder: MÜLLER, Karsten, 51375 Leverkusen (DE); MIES, Detlef, 50189 Elsdorf (DE); ABECK, Volkmar, 50827 Köln (DE)
(74) Vertreter: Klimiuk, Meike
(86) Internationale Anmeldenummer: PCT/EP2009/000647
(87) Internationale Veröffentlichungsnummer: WO 2009/098006

(56) Entgegenhaltungen:
- EP-A- 0 308 074
- EP-A- 0 605 235
- EP-A- 0 993 937
- FR-A- 2 834 927
- US-A1- 2005 153 613
- US-B1- 6 706 370

## Beschreibung

Die Erfindung betrifft ein Verfahren zur Herstellung eines Verbundteils, umfassend eine erste Schicht, wenigstens eine an die erste Schicht grenzende harzgetränkte Faserschicht und wenigstens eine an die Faserschicht grenzende weitere Schicht auf der Basis eines vernetzten, geschlossenzelligen Polyolefin-Schaumstoffs.

Die Erfindung betrifft insbesondere ein Verfahren zur Herstellung eines Verbundteils mit einer Wabenstruktur als erste Schicht, einer angrenzenden harzgetränkten Faserschicht mit Polyurethan als Harz, die zur Verbesserung der akustischen Eigenschaften mit einer schallschluckenden Schicht aus vernetztem, geschlossenzelligem Polyolefin-Schaumstoff versehen ist.

### Technisches Gebiet

Typische Verbundteile, wie sie z. B. für Dach-, Motorhauben-, Heckklappen-, Tür- oder Bodenplatten-Module im Automobilbereich und im Fahrzeuginnenbereich z. B. als Ladeboden und Türinnenverkleidung eingesetzt werden, bestehen beispielsweise aus drei Lagen: Die beiden äußeren Lagen bestehen vorzugsweise aus einem Verstärkungsgewebe (z. B. Glasfasermatte, Naturfasermatte), das in einem Sprühprozess mit einem Polyurethansystem (z. B. Baypreg® der Fa. Bayer MaterialScience AG, Leverkusen) besprüht wird. Die mittlere Schicht besteht vorzugsweise aus einem Wabenmaterial, dass aus Papier, thermoplastischen Werkstoffen oder Metallen (z. B. Aluminium) hergestellt ist. Dieses Sandwichelement kann dann in einem Werkzeug in die gewünschte Geometrie unter erhöhter Temperatur (ca. 100 - 140 °C) verpresst werden, z. B. zu einem Ladeboden. Der Vorteil dieses Sandwichelementes ist seine hohe Biegesteifigkeit bei geringem Bauteilgewicht aufgrund der Sandwichbauweise. Solche Verbundteile sind ausführlich im Status-Report "Structhan®, ein Faserverbundwerkstoff mit Zukunft" der Bayer AG, Bestell-Nr. PU 52231, und im Sonderdruck "PUR-Faserverbundwerkstoffe für den Leichtbau im Fahrzeuginnenraum" der Bayer AG, Bestell-Nr. PU 52248 beschrieben. Auch in EP-A 1 319 503 werden die genannten Sandwichelemente eingesetzt.

Derartige Bauteile leiten allerdings störende akustische Geräusche ohne wirksamen Widerstand in den Fahrzeuginnenraum weiter und werden, je nach Frequenz, selbst zum Schwingen angeregt.

### Stand der Technik

Aus der DE 10 2005 016653 A1 ist eine schallabsorbierende Innenverkleidung von Verkehrsmitteln, insbesondere eine schallabsorbierende Innenverkleidung von Rumpfzellen von Luftfahrzeugen, mit einer insbesondere wabenförmigen Kemstruktur und beidseitig auf die Kernstruktur aufgebrachten Deckschichten bekannt, bei der mindestens eine Deckschicht zumindest bereichsweise luftdurchlässig ausgebildet und zumindest bereichsweise eine Schallabsorptionsschicht angeordnet ist. Die mechanische Anbindung der Schallabsorptionsschicht erfolgt in einem zusätzlichen Arbeitsschritt durch Heiß- oder Kaltklebeverfahren, Schweißen, durch Nieten, Klettenbänder oder dergleichen.

Die derzeit im Markt befindlichen Sandwichbauteile besitzen entweder keine oder eine nachträglich aufgebrachte schallisolierende Schicht. Sobald die schallisolierende Schicht in einem zweiten Schritt nachträglich auf ein vorhandenes Trägermaterial aufgetragen werden muss, steigert dies die Herstellkosten und die Zykluszeiten bei der Herstellung. Oftmals ist auch die Haftung - trotz Verklebung ̶ schlecht.

Dokument EP 0 993 937 A1 offenbart eine Verbundkonstruktionsplatte mit einem thermoplatischen Schaumkern.

### Aufgabe

Aufgabe war es daher, ein Verfahren zur Herstellung solcher Verbundteile mit geringem Gewicht, hoher Biegesteifigkeit und guten akustischen Eigenschaften zur Verfügung zu stellen, mit dem die Verbundteile gleichzeitig einfach, kostengünstig und in kurzen Zykluszeiten hergestellt werden können.

### Darstellung der Erfindung

Die Erfindung löst diese Aufgabe durch ein Verfahren nach Anspruch 1, bevorzugt in Verbindung mit einem oder mehreren Merkmalen der Unteransprüche.

Das Verfahren umfasst dabei folgende Verfahrensschritte: Zunächst wird eine erste Schicht, eine harzgetränkte Faserschicht und eine Polyolefin-Schaumstoffschicht in eine beheizbare Formpresse eingebracht, z. B. eingelegt, wobei die Aushärtung des Harzes in der Faserschicht noch nicht abgeschlossen ist. Anschließend erfolgt ein Verpressen der eingelegten Schichten unter einem Druck von > 5 bar, bevorzugt zwischen 5 bar und 50 bar, und bei einer Wandtemperatur der Formpresse zwischen 50 °C und 120 °C, bevorzugt zwischen 60°C und 90°C, wobei der Polyolefin-Schaumstoff auf weniger als 15 % seiner Ausgangsdicke gestaucht, das Harz aushärtet und die harzgetränkte Faserschicht mit der angrenzenden Schicht auf der Basis des vernetzten, geschlossenzelligen Polyolefin-Schaumstoffs sowie mit der ersten Schicht vollflächig verklebt wird. Anschließend kann das Verbundteil unter Rückstellung des Polyolefin-Schaumstoffs auf wenigstens 70 % seiner ursprünglichen Dicke entformt werden.

Bei dem erfindungsgemäßen Verfahren handelt es sich somit um einen Einstufenprozess, bei dem die einzelnen Lagen des Verbundteiles, nämlich die erste Schicht, die angrenzende(n) harzgetränkte(n) Faserschicht(en) und die Polyolefin-Schaumstoffschicht in einem Arbeitsschritt miteinander verbunden werden. Ein nachträgliches Aufkleben einer schalldämmenden Oberflächenbeschichtung entfällt somit.

Die Aushärtung des für die Tränkung der Faserschicht eingesetzten Harzes wird durch eine Temperaturerhöhung im Verfahrensschritt ii), dem Verpressen, gestartet bzw. beschleunigt. Hierzu muss die erhöhte Temperatur der Formpressenwandung durch die Polyolefin-Schaumstoffschicht in die Faserschicht geleitet werden. Dieses ist überraschenderweise trotz der sehr geringen Wärmeleitfähigkeit des eingesetzten geschlossenzelligen Polyolefm-Schaumstoffs möglich, da der Polyolefin-Schaumstoff unter den beanspruchten Pressbedingungen auf weniger als 15 % seiner Ausgangsdicke gestaucht wird, wodurch vermutlich der Wärmedurchgangswiderstand reversibel stark erniedrigt wird.

Als Material für die erste Schicht können insbesondere thermoformbare PUR-Schaumstoffe, Papier-, Metall- oder Kunststoffwaben eingesetzt werden, wobei Papierwaben-Strukturen bevorzugt werden.

Als Material für die Faserschicht können Glasfasermatten, Glasfaservliese, Glasfaserwirrlagen, Glasfasergewebe, geschnittene oder gemahlene Glas- oder Mineral-Fasern, Naturfasermatten und ̶ gewirke, geschnittene Naturfasern, sowie Fasermatten, -vliese und -gewirke auf der Basis von Polymer-, Kohlenstoff- bzw. Aramidfasern sowie deren Mischungen eingesetzt werden.

Die Faserkomponente der Faserschicht kann als Gewebe auf die erste Schicht aufgelegt oder im Falle der geschnittenen oder gemahlenen Fasern mit der Polyurethankomponente oder über die Polyurethankomponente eingebracht oder aufgesprüht werden.

Als Harz für die Tränkung der Faserschicht wird bevorzugt Polyurethan verwendet. Das Polyurethanharz ist erhältlich durch Umsetzung von
- mindestens einer Polyolkomponente mit einer durchschnittlichen OH-Zahl von 300 bis 700, die mindestens ein kurzkettiges und ein langkettiges Polyol enthält, wobei die Ausgangspolyole eine Funktionalität von 2 - 6 aufweisen,
- mindestens einem Polyisocyanat,
- Wasser,
- Aktivatoren,
- Stabilisatoren sowie
- gegebenenfalls weiteren Hilfs-, Trenn- und Zusatzmitteln.

Als Polyolkomponente eignen sich Polyole mit mindestens zwei gegen Isocyanatgruppen reaktiven H Atomen; vorzugsweise werden Polyesterpolyole und Polyetherpolyole eingesetzt.

Bevorzugt werden erfindungsgemäß höherkernige Isocyanate der Diphenylmethandiisocyanat-Reihe (pMDI-Typen), deren Prepolymere oder rohes MDI eingesetzt.

Wasser wird in Mengen von 0,1 - 3,0, bevorzugt 0,3 - 2,0 Gew.-Teile auf 100 Gew.-Teile der Polyolformulierung eingesetzt.

Zur Katalyse werden die an sich üblichen Aktivatoren für die Treib- und Vernetzungsreaktion wie Amine oder Metallsalze verwendet.

Als Stabilisatoren kommen vor allem für die Schaumstabilisation Polyethersiloxane, speziell wasserlösliche Vertreter, in Frage. Diese Verbindungen sind im Allgemeinen so aufgebaut, dass ein Copolymerisat aus Ethylenoxid und Propylenoxid mit einem Polydimethylsiloxanrest verbunden ist. Derartige Schaumstabilisatoren sind z. B. in US-A 2 834 748, US-A 2 917 480 und US-A 3 629 308 beschrieben. Von besonderem Interesse sind vielfach über Allophanatgruppen verzweigte Polysiloxan-Polyoxyalkylen-Copolymere gemäß der DE-A 25 58 523. Geeignet sind auch andere Organopolysiloxane, oxyethylierte Alkylphenole, oxyethylierte Fettalkohole, Paraffinöle, Ricinusöl- bzw. Ricinolsäureester, Türkischrotöl und Erdnussöl, Paraffine, Fettalkohole und Dimethylpolysiloxane.

Zur Verbesserung der Emulgierwirkung, der Dispergierung von Füllstoffen, der Zellstruktur des PU-Schaumes und/oder zur Stabilisierung des PU-Schaumes eignen sich ferner oligomere Polyacrylate mit Polyoxyalkylen- und Fluoralkanresten als Seitengruppen.

Der Reaktionsmischung zur Herstellung der Polyurethanharze können gegebenenfalls weitere Hilfs-, Trenn- und Zusatzmittel einverleibt werden, beispielsweise oberflächenaktive Zusatzstoffe, wie Emulgatoren, Flammschutzmittel, Keimbildungsmittel, Oxidationsverzögerer, Gleit- und Entformungsmittel, Farbstoffe, Füllstofe, Dispergierhilfen und Pigmente. Die oberflächenaktiven Substanzen werden üblicherweise in Mengen von 0,01 bis 5 Gew.-Teilen, bezogen auf 100 Gew.-Teile des Polyols angewandt.

Die Komponenten werden in solchen Mengen zur Umsetzung gebracht, dass das Äquivalenzverhältnis der NCO-Gruppen der Polyisocyanate a) zur Summe der gegenüber Isocyanatgruppen reaktiven Wasserstoffe der Komponenten b) und c) sowie gegebenenfalls e) 0,8:1 bis 1,4:1, vorzugsweise 0,9:1 bis 1,3:1 beträgt.

Als vernetzter, geschlossenzelliger Polyolefin-Schaumstoff wird bevorzugt ein chemisch oder physikalisch vernetzter Polyethylenschaumstoff einer Dichte von 30 bis 120 kg/m³ verwendet, besonders bevorzugt mit einer Dichte von 35 bis 90 kg/m³. Die Ausgangsdicke der Polyolefin-Schaumstoff-Schicht beträgt bevorzugt 2 bis 6 mm, insbesondere 3 bis 5 mm.

Als geschlossenzellig im Sinne der vorliegenden Erfindung wird ein Schaum angesehen, der mindestens 70 % geschlossene Zellen aufweist. Der erfindungsgemäß eingesetzte geschlossenzellige Polyolefin-Schaumstoff weist bevorzugt mehr als 90 % geschlossene Zellen auf.

Besonders bevorzugt sind PE-Schäume, die z. B. durch höhere HDPE-Anteile eine Wärmeformbeständigkeit > 100 °C, bevorzugt > 110 °C aufweisen. Geeignet ist z. B. die Type "Trocellen V4504VRN7" der Trocellen GmbH.

Die Wärmeformbeständigkeit wird in Anlehnung an die ISO 2796-1986 wie folgt bestimmt: Abschnitte des zu testenden Polyolefin-Schaumstoffs werden in trockener Atmosphäre und Bedingungen gemäß der ISO 2796-1986 bei verschiedenen Temperaturen temperiert und anschließend jeweils die prozentuale Änderung in Länge und Breite bestimmt. Gemessen werden die Proben jedoch ̶ abweichend von den Vorgaben der ISO 2796-1986 - für einen Zeitraum von 4 Stunden und in einem engeren Temperaturraster von 5 °C +/-1,5 °C, also beispielsweise 70 °C, 75 °C, 80 °C etc. bis 130 °C. Diejenige maximale Temperatur, bei der die prozentuale Änderung der Länge und der Breite jeweils noch unter 5 % beträgt, ist die Wärmeformbeständigkeit im Sinne dieser Erfindung.

Der eingesetzte Polyolefin-Schaumstoff wird vor dem Einlegen in die Formpresse bevorzugt einer Oberflächenbehandlung, z. B. Beflammung oder Corona-Behandlung unterzogen, um die Haftung zum angrenzenden Harz zu verbessern.

Die Polyolefin-Schaumstoffschicht zeichnet sich insbesondere dadurch aus, dass sie sich nach der Entformung des Verbundteils auf mindestens 70 %, bevorzugt auf ca. 90 % - 100 % ihrer Ausgangsdicke zurückstellt. Die Vernetzung, die Geschlossenzelligkeit und die hohe Wärmeformbeständigkeit sind dabei Voraussetzungen für die gewünschte hohe Rückstellfähigkeit des eingesetzten Polyolefin-Schaumstoffs.

Die bevorzugt eingesetzten Polyurethanharze härten ̶ nach Überschreiten der Starttemperatur ̶ im Allgemeinen exotherm aus. Die dadurch bedingte Erhöhung der Temperatur im Kontaktbereich zu dem Polyolefin-Schaumstoff muss bei der Bestimmung der notwendigen Wärmeformbeständigkeit des Polyolefin-Schaumstoffs entsprechend berücksichtigt werden. Die Wärmeformbeständigkeit des eingesetzten Polyolefin-Schaumstoffs liegt daher bevorzugt um 30 bis 60 °C, insbesondere um 40 bis 50 °C höher als die Wandtemperatur der Formpresse.

Zusätzlich zu der ersten Schicht, der an die erste Schicht grenzenden harzgetränkten Faserschicht und der an die Faserschicht grenzenden Schicht auf der Basis eines vernetzten, geschlossenzelligen Polyolefin-Schaumstoffs können noch weitere Schichten eingesetzt werden, z. B. eine Dekorschicht auf der der Polyolefin-Schaumstoffschicht abgewandten Seite der ersten Schicht. Als Dekorschicht können z. B. hochglänzende Polycarbonatfolien, Polyvinylchloridfolien, Leder, textile Materialien u. Ä. eingesetzt werden.

Die Herstellung der erfmdungsgemäßen Verbundteile kann nach einer besonders bevorzugten Ausführungsform der Erfindung so durchgeführt werden, dass zunächst auf die erste Schicht beidseitig eine Faserschicht aufgebracht wird, die mit den Polyurethan-Ausgangskomponenten beaufschlagt wird ("Rohling"). Alternativ kann der Verstärkungsstoff auch über den Polyurethanrohstoffstrom durch geeignete Mischkopftechnik eingebracht werden. Die Polyurethanharze können nach den in der Literatur beschriebenen Verfahren, z. B. dem one-shot- oder dem Prepolymer-Verfahren, mit Hilfe von dem Fachmann im Prinzip bekannten Verarbeitungsvorrichtungen hergestellt werden. Vorzugsweise werden sie nach dem one-shot-Verfahren hergestellt.

Der so hergestellte Rohling wird in ein Formwerkzeug überführt, das die Polyolefin-Schaumstoffschicht und gegebenenfalls eine Dekorschicht enthält, und durch Zufahren der Form und durch die Reaktion der PUR-Rohstoffkomponenten mit der Polyolefin-Schaumstoffschicht verbunden. Der Rohling kann auch durch geeignete Techniken direkt im Formwerkzeug erzeugt werden. Soweit der eingesetzte Polyolefin-Schaumstoff einer Oberflächenbehandlung, z. B. Beflammung oder Corona-Behandlung unterzogen wurde, wird die Polyolefin-Schaumstoffschicht so in das Werkzeug eingelegt, dass deren oberflächenbehandelte Schicht zur Faserschicht zeigt.

Besonders bevorzugt kann das Verbundteil nach der Entformung noch einer Nachtemperung bei Temperaturen zwischen 60 und 100 °C für 15 bis 90 Minuten unterzogen werden.

Die erfindungsgemäßen Verbundwerkstoffe zeichnen sich durch niedrige Bauteilgewichte im Bereich von ca. 1200 ̶ 7000 g/m² und hohe Biegesteifigkeiten im Bereich von ca. 3 x 10⁶ ̶ 400 x 10⁶ N·mm² (nach DIN 53293) aus. Insbesondere besitzen sie im Vergleich zu herkömmlichen Verbundteilen zusätzlich schallisolierende Eigenschaften bei gleichzeitig niedrigen Herstellkosten und Zykluszeiten.

Anwendungsfelder der erfindungsgemäßen Verbundwerkstoffe sind Dach-, Motorhauben-, Heckklappen-, Tür- oder Bodenplatten-Module im Automobilbereich und im Fahrzeuginnenbereich z. B. als Ladeboden und Türinnenverkleidung.

Die eingesetzte Formpresse besteht beispielsweise im einfachsten Fall aus zwei planparallel zueinander verlaufenden Platten, die beispielsweise durch Öl oder elektrisch temperiert werden können. Der Abstand der Formwände kann dabei im einfachsten Fall an jeder Stelle gleich sein, es können aber an gewünschten Stellen stegartige Bereiche vorgesehen sein, an denen die in die Presse eingelegten Schichten stärker verpresst und - bei wabenförmigern Ausgangsmaterial für die erste Schicht - bleibend verjüngt werden. Die Polyolefin-Schaumstoffschicht passt sich diesen Oberflächenkonturen hervorragend an. Je nach der Form des gewünschten Endprodukts können die Oberflächen der Werkzeughälften auch eine komplexe dreidimensionale Form aufweisen, beispielsweise um die Form eines Fahrzeughimmels zu bilden. Auch bei so gewölbten oder gewundenen Konturen können die Oberflächen der Werkzeughälften in weiten Bereichen im Wesentlichen parallel zueinander verlaufen, ggf. mit definierten Bereichen, an denen das Endprodukt stark zusammengepresst und damit verjüngt wird.

Die Erfindung soll anhand der nachfolgenden Beispiele näher erläutert werden.

### Beispiel

Herstellung einer Platte mit akustisch wirksamer Schaumschicht und einer Gesamtdicke von ca. 14 mm.

Ein Polyethylen-Schaum, Type "Trocellen V4504VRN7", mit einer Wärmeformbeständigkeit von 110 °C, mit einer Corona behandelten Oberfläche und einer Nenndicke von 4 mm wurde in eine Werkzeugkavität mit einem Spaltmaß von 10 mm eingelegt. Der Polyurethan(PUR)-Sandwich bestand aus einer 10 mm dicken Papierwabe, die beidseitig eine Glasfasermatte mit einem Flächengewicht von 450 g/m² aufweist. Die beiden Glasfasermatten wurden mit jeweils 450 g/m² Polyurethan besprüht. Dieser Sandwich wurde anschließend im Werkzeug auf der bereits angewärmten PE-Schaumschicht abgelegt. Das Werkzeug war auf 60°C aufgeheizt. Beim Pressvorgang wurden die Schichten im geschlossenen Werkzeug für 180 sec. auf 10 mm verpresst; der Druck betrug ca. 10 bar. Nach der Entnahme des Verbundteiles stellte sich der PE-Schaum auf ca. 98 % seiner ursprünglichen Dicke wieder auf.

Nach einer 30 min. Temperung bei ca. 80°C wurde ein Verbundteil mit einer sehr glatten Oberfläche und folgenden Daten erhalten:

| | |
|---|---|
| gemessene Ausgangsdicke des PE-Schaums: | 3,95 mm |
| gemessene Dicke des PE-Schaums nach Verarbeitung: | 3,88 mm |
| Biegesteifigkeit: | 35 x 10⁶ N·mm² |
| Bauteilgewicht: | 2780 g/m² |

## Patentansprüche

1. Verfahren zur Herstellung eines Verbundteils, umfassend eine erste Schicht, wenigstens eine an die erste Schicht grenzende harzgetränkte Faserschicht und wenigstens eine an die Faserschicht grenzende weitere Schicht auf der Basis eines vernetzten, geschlossenzelligen Polyolefin-Schaumstoffs, mit folgenden Verfahrensschritten:
i) Einbringen der ersten Schicht, der harzgetränkten Faserschicht und der Polyolefm-Schaumstoffschicht in eine beheizbare Formpresse, wobei die Aushärtung des Harzes in der Faserschicht noch nicht abgeschlossen ist;
ii) Verpressen der unter Schritt i) eingebrachten Schichten unter einem Druck von > 5 bar und bei einer Wandtemperatur der Formpresse zwischen 50 °C und 120 °C, wobei der Polyolefin-Schaumstoff auf weniger als 15 % seiner Ausgangsdicke gestaucht wird, das Harz aushärtet und die harzgetränkte Faserschicht mit der angrenzenden Schicht auf der Basis des vernetzten, geschlossenzelligen Polyolefin-Schaumstoffs sowie mit der ersten Schicht vollflächig verklebt wird;
iii) Entformen des Verbundteils unter Rückstellung des Polyolefin-Schaumstoffs auf wenigstens 70 % seiner ursprünglichen Dicke.

2. Verfahren zur Herstellung eines Verbundteils nach Anspruch 1, **dadurch gekennzeichnet, dass** sich auf der der Faserschicht gegenüberliegenden Seite der ersten Schicht eine weitere mit Harz getränkte Faserschicht befindet.

3. Verfahren zur Herstellung eines Verbundteils nach Anspruch 1 oder 2, **dadurch gekennzeichnet, dass** als Harz zur Tränkung der Faserschicht oder Faserschichten ein Polyurethanharz verwendet wird.

4. Verfahren zur Herstellung eines Verbundteils nach einem der Ansprüche 1 bis 3, **dadurch gekennzeichnet, dass** als Polyolefin-Schaumstoff ein Polyethylenschaumstoff einer Dichte von 30 bis 120 kg/m³ mit einer Wärmeformbeständigkeit > 110 °C verwendet wird.

5. Verfahren zur Herstellung eines Verbundteils nach einem der Ansprüche 1 bis 4, **dadurch gekennzeichnet, dass** die erste Schicht beim Verpressen in Teilbereichen bleibend gestaucht wird, während andere Teilbereiche im Wesentlichen ungestaucht bleiben, so dass das Verbundteil eine entsprechend geformte Oberflächengeometrie aufweist.

6. Verfahren zur Herstellung eines Verbundteils nach einem der Ansprüche 1 bis 5, **dadurch gekennzeichnet, dass** die Polyolefin-Schaumstoffschicht vor dem Einlegen in die Formpresse auf ihrer der Faserschicht zugewandten Oberfläche einer Oberflächenbehandlung, insbesondere einer Corona-Behandlung unterzogen wird.

7. Verfahren zur Herstellung eines Verbundteils nach einem der Ansprüche 1 bis 6, **dadurch gekennzeichnet, dass** die Verklebung der Polyolefin-Schaumstoff-Schicht mit der Faserschicht unmittelbar durch die Harztränkung der Faserschicht und ohne Zusatz eines weiteren Klebers erfolgt.

8. Verfahren zur Herstellung eines Verbundteils nach einem der Ansprüche 1 bis 7, **dadurch gekennzeichnet, dass** die Wandtemperatur der Formpresse beim Verfahrensschritt ii) zwischen 60 °C und 90 °C liegt.

## Claims

1. Process for producing a composite part comprising a first layer, at least one resin-saturated fibre layer adjoining the first layer and at least one further layer adjoining the fibre layer and based on a crosslinked, closed-cell polyolefin foam, with the following steps:
i) introducing the first layer, the resin-saturated fibre layer and the polyolefin foam layer into a heatable moulding press, the hardening of the resin in the fibre layer having not yet been concluded;
ii) pressing the layers introduced in step i) under a pressure of > 5 bar and with a moulding-press-shell temperature of from 50°C to 120°C, where the polyolefin foam is compacted to less than 15% of its initial thickness, the resin hardens and the resin-saturated fibre layer is adhesively bonded to the adjoining layer based on the crosslinked, closed-cell polyolefin foam, and also to the first layer, over the entire area;
iii) demoulding of the composite part with return of the polyolefin foam to at least 70% of its initial thickness.

2. Process for producing a composite part according to Claim 1, **characterized in that**, on that side of the first layer opposite to the fibre layer there is a further resin-saturated fibre layer.

3. Process for producing a composite part according to Claim 1 or 2, **characterized in that** a polyurethane resin is used as resin for saturating the fibre layer or fibre layers.

4. Process for producing a composite part according to any of Claims 1 to 3, **characterized in that** a polyethylene foam of density from 30 to 120 kg/m³ with a heat distortion temperature > 110°C is used as polyolefin foam.

5. Process for producing a composite part according to any of Claims 1 to 4, **characterized in that**, during the pressing process, some regions of the first layer are lastingly compacted, while some other regions remain in essence uncompacted, in such a way that the composite part has a correspondingly shaped surface geometry.

6. Process for producing a composite part according to any of Claims 1 to 5, **characterized in that**, prior to insertion into the moulding press, the polyolefin foam layer is subjected to a surface treatment, in particular a corona treatment, on its surface facing towards the fibre layer.

7. Process for producing a composite part according to any of Claims 1 to 6, **characterized in that** the adhesive bonding of the polyolefin foam layer to the fibre layer takes place directly by virtue of the resin-saturation of the fibre layer and without addition of any further adhesive.

8. Process for producing a composite part according to any of Claims 1 to 7, **characterized in that** the shell temperature of the moulding press during step ii) is from 60°C to 90°C.

## Revendications

1. Procédé pour la fabrication d'une pièce composite, comprenant une première couche, au moins une couche de fibres imbibée de résine adjacente à la première couche et au moins une autre couche adjacente à la couche de fibres à base d'une mousse de polyoléfine réticulée, à cellules fermées, présentant les étapes de procédé suivantes :
i) introduction de la première couche, de la couche de fibres imbibée de résine et de la couche de mousse de polyoléfine dans une presse de moulage pouvant être chauffée, le durcissement de la résine dans la couche de fibres n'étant pas encore terminé ;
ii) pressage des couches introduites dans l'étape i) à une pression > 5 bars et à une température de paroi de la presse de moulage entre 50°C et 120°C, la mousse de polyoléfine étant écrasée à moins de 15% de son épaisseur de départ, la résine durcissant et la couche de fibres imbibée de résine étant collée sur toute la surface avec la couche adjacente à base de la mousse de polyoléfine réticulée, à cellules fermées, ainsi qu'avec la première couche ;
iii) démoulage de la pièce composite avec retour de la mousse de polyoléfine à au moins 70% de son épaisseur d'origine.

2. Procédé pour la fabrication d'une pièce composite selon la revendication 1, **caractérisé en ce qu'**une autre couche de fibres imbibée de résine se trouve sur la face opposée à la couche de fibres de la première couche.

3. Procédé pour la fabrication d'une pièce composite selon la revendication 1 ou 2, **caractérisé en ce qu'**on utilise, comme résine pour imbiber la ou les couches de fibres, une résine de polyuréthane.

4. Procédé pour la fabrication d'une pièce composite selon l'une quelconque des revendications 1 à 3, **caractérisé en ce qu'**on utilise comme mousse de polyoléfine, une mousse de polyéthylène d'une densité de 30 à 120 kg/m³ présentant une stabilité dimensionnelle thermique > 110°C.

5. Procédé pour la fabrication d'une pièce composite selon l'une quelconque des revendications 1 à 4, **caractérisé en ce que** la première couche est écrasée de manière permanente dans des zones partielles lors du pressage, alors que d'autres zones partielles restent sensiblement non écrasées, de manière telle que la pièce composite présente une géométrie de surface façonnée de manière correspondante.

6. Procédé pour la fabrication d'une pièce composite selon l'une quelconque des revendications 1 à 5, **caractérisé en ce que** la couche de mousse de polyoléfine est soumise, avant l'introduction dans la presse de moulage, sur la surface orientée vers la couche de fibres, à un traitement de surface, en particulier un traitement au corona.

7. Procédé pour la fabrication d'une pièce composite selon l'une quelconque des revendications 1 à 6, **caractérisé en ce que** le collage de la mousse de polyoléfine avec la couche de fibres est réalisé directement par l'imbibition par la résine de la couche de fibres et sans addition d'un autre adhésif.

8. Procédé pour la préparation d'une pièce composite selon l'une quelconque des revendications 1 à 7, **caractérisé en ce que** la température de la paroi de la presse de moulage lors de l'étape de procédé ii) est située entre 60°C et 90°C.
